# EUROPÄISCHE PATENTANMELDUNG

(11) **EP 1 001 251 A1**
(43) Veröffentlichungstag der Anmeldung: **17.05.2000**
(21) Anmeldenummer: 98121336.6
(22) Anmeldetag: 10.11.1998
(51) Int. Cl.: G01C 15/00, G01S 17/66

(54) **Laser-Positionier-System**

(71) Anmelder: Leica Geosystems AG, 9435 Heerbrugg (CH)
(72) Erfinder: Schneider,Klaus,Dr., 6845 Hohenems (AT); Frei,Erwin,Dr., 9443 Widnau (CH)
(74) Vertreter: Kaminski, Susanne, Dr.

(57) **Zusammenfassung**

Ein Lasergerät mit einem sichtbaren Laser (2, 3, 5) weist eine Sendeoptik (4) auf mit um zwei nicht parallele Achsen (7a, 7b) dreh- und steuerbare Ablenkmittel. Deren Ansteuerung mittels Stellmotoren (8a, 8b) und Winkelkodern (9a, 9b) erfolgt punktaufgelöst nach einem vorgegebenen beliebigen Muster. Dadurch wird einerseits eine Projektion beliebiger Muster und andererseits eine exakte Raumvermessung sowie Strahlnachführung in bezug auf sich bewegende Objekte ermöglicht. Während der automatischen Strahlnachführung wird der Laserstrahl (5) synchron zu Empfangsfrequenz und Belichtungszeit eines Empfangssensors (15) gepulst oder getaktet.

## Beschreibung

Die Erfindung bezieht sich auf ein Lasergerät, bei dem ein von einer Sendeoptik abgelenkter Laserstrahl verwendet wird.

Laseroptische Vermessungsgeräte werden im Bereich des Bauwesens als Nivellier- und Messgeräte angewandt. Bekannt sind Rotationslasergeräte, die Laserlichtebenen erzeugen, und Punktlasergeräte oder Laser-Liner.

Rotationslaser erzeugen eine Laserlichtebene mittels rotierender Prismen oder Spiegel. Diese kann parallel, vertikal oder geneigt zur Horizontalen aufgespannt sein. Nachteilig ist, dass wegen der aufgeteilten Lichtleistung zum Sichtbarmachen der Laserlichtebene am Empfangsort Detektoren erforderlich sind. Ausserdem können entsprechend dem Arbeitstyp nur parallele, vertikale oder geneigte Bezugsebenen erzeugt werden.

Bei Punktlasergeräten werden optische Elemente oder Strahlteiler verwendet, um den Punktlaserstrahl entsprechend dem optischen Element beziehungsweise dem Strahlteiler abzulenken. Mittels Punktlasergeräten werden beispielsweise zueinander senkrechte Laserlichtachsen erzeugt, um Parallelen oder Vertikalen festzulegen. Nachteilig ist, dass die Ausrichtung des Laserstrahls durch das optische Ablenkungselement konstruktiv festgelegt ist. Es ist daher nicht möglich, beliebige Winkel zwischen zwei zur Peilung ausgerichteten Laserachsen bei gleichzeitiger Nivellierung einzustellen.

Darüber hinaus sind Laserinstrumente mit einem Referenzlaser bekannt. Dem Arbeitslaserstrahl wird ein weiterer Referenzlaserstrahl in einem Winkel von 180° und konzentrisch zur Nullgradstellung des Arbeitslasers zugeordnet. Einer oder beide Laser können drehbar gelagert sein, so dass auch beliebige Winkelwerte einstellbar sind. Nachteilig ist jedoch, dass zwei Laser erforderlich sind.

Die Aufgabe der vorliegenden Erfindung besteht darin, die oben genannten Nachteile zu vermeiden. Insbesondere soll ein Lasergerät angegeben werden, mit dem Projektions- und Vermessungsaufgaben flexibler durchführbar sind.

Gemäss der Erfindung wird diese Aufgabe gelöst durch ein Lasergerät, umfassend: eine Einrichtung zur Erzeugung eines Laserstrahls; eine Sendeoptik zur Ablenkung des Laserstrahls, die zwei jeweils um eine Achse drehbare optische Ablenkmittel umfasst, wobei die Achsen nicht parallel zueinander verlaufen; je eine mit den Ablenkmitteln gekoppelte Stelleinrichtung zum Festlegen der Drehstellung des jeweiligen Ablenkmittels und; eine Steuerungseinrichtung zur Steuerung der Stelleinrichtungen in Abhängigkeit von einer vorgegeben Richtung.

Eine weitere Aufgabe der Erfindung besteht darin, ein Sende-und Empfangslasergerät anzugeben, das eine geringe mittlere Sendeleistung aufweist.

Diese Aufgabe wird gelöst durch ein Lasergerät, umfassend: eine Einrichtung zur Erzeugung eines gepulsten oder getakteten Laserstrahls; eine Sende- und Empfangsoptik zur Abstrahlung des Laserstrahls und zum Empfang des von einem Objekt reflektierten Laserstrahls; einen Sensor zur Detektion des empfangenen Laserstrahls und Steuerungsmittel zur geräteinternen Steuerung in Abhängigkeit des vom Sensor detektierten Laserstrahls, wobei ein Sendeimpuls des Laserstrahls synchron zu einer Empfangsfrequenz des Sensors und/oder synchron zu einer Belichtungszeitdauer des Sensors abgestrahlt wird.

Abweichend von den bisherigen lasergestützten Vermessungsgeräten verwendet das Lasergerät nach der Erfindung zwei Ablenkmittel, die um jeweilige nicht parallele Achsen drehbar sind. Zweckmässigerweise haben die Achsen einen Schnittpunkt. Insbesondere können die Achsen im Schnittpunkt senkrecht zueinander stehen. Dadurch ist der Laserstrahl in der horizontalen Ebene beliebig, d. h. um 360°, schwenkbar, in der vertikalen Ebene in der Praxis um ungefähr 270°. Beliebige Raumpunkte können vom Laserstrahl beleuchtet werden, indem dem Gerät die jeweilige Richtung des Projektionspunkts relativ zum Gerätestandort mitgeteilt wird. Die Senderichtung des Laserstrahls wird durch geeignete Steilmittel, beispielsweise exakt arbeitende Schrittmotoren in Verbindung mit Winkelkodern, die die Drehtstellung des jeweiligen Ablenkmittels festlegen, eingestellt. Die Motoren ihrerseits werden von einer vorzugsweise digital arbeitenden Steuereinrichtung angesteuert. Für die Ablenkmittel eignen sich Spiegel oder Prismen. Die punktgenaue Steuerung des Laserstrahls ermöglicht die Darstellung aller Projektionsfiguren der bisherigen Geräte wie einzelne oder sich schneidende Ebenen sowie einzelne Punkte; darüber hinaus können vorteilhafterweise beliebige Punktmuster aus einer Vielzahl von Projektionspunkten, beliebige lineare und nicht lineare Kurvenformen sowie Flächen projiziert werden. Das Gerät ermöglicht sowohl Vermessungsaufgaben als auch eine blosse Positionierung von lasererzeugten Bildmustern.

In Weiterbildung der Erfindung ist eine Empfangsoptik vorgesehen, die den von einem beliebigen, beleuchteten Objekt, gegebenenfalls einen am Zielpunkt angeordneten Retroreflektor für automatische Zielerfassung, reflektierten Laserstrahl empfängt. Zweckmässigerweise ist die Sendeoptik zugleich als Empfangsoptik ausgebildet. Der empfangene Laserstrahl wird einerseits unter Anwendung herkömmlicher Methoden zur Entfernungsmessung des Objekts oder Retroreflektors weiter verarbeitet. Aus der Entfernung des Objekts und der Winkelstellung der Stellmotoren sind die Koordinaten des anvisierten Raumpunkts eindeutig festgelegt. Die digitale Steuerungseinrichtung besorgt die Umrechnung der Koordinaten auf ein beliebiges Koordinatensystem. Andererseits werden die Stellmotoren der Sendeoptik mittel einer Nachführungseinrichtung derart gesteuert, dass eine Nachführungsregelung des Laserstrahls gemäss einer Bewegung des Objekts erreicht wird, sogenanntes ATR (Automatic Tracking). Hierzu geeignet ist eine CCD-Anordnung, durch die ein Auswandern des empfangenen Laserstrahls aus einem Bezugspunkt, beispielsweise der Mitte der CCD-Anordnung, festgestellt wird und mittels der Steuerungseinrichtung die Stellmotoren derart gegengekoppelt nachgestellt werden, dass der empfangene Laserstrahl an den Referenzpunkt möglichst nahe zurückkehrt. Ein Strahlteiler im Empfangsweg des Laserstrahls teilt den Empfangsstrahl zur Einspeisung in die Einrichtungen zur Entfernungsmessung und zur Nachführung auf.

Besonders vorteilhaft ist es, dass der Laser synchron zur Empfangsfrequenz und/oder synchron zur Belichtungszeit oder Verschlusszeit der CCD-Anordnung gepulst wird. Die über die Zeit gemittelte Laserleistung bleibt dadurch ausreichend niedrig und augensicher. Während eines Sendeimpulses ist die Sendeleistung demgegenüber wesentlich höher, so dass das reflektierte, empfangene Laserlicht genügend stark ist, um im Sensor sicher ausgewertet werden zu können. Dieser Ausgestaltung kommt unabhängig von der biaxialen Ausbildung der Sende- und Empfangsoptik eigenständige Bedeutung zu.

Über eine digitale Schnittstelle können der Steuerungseinrichtung von einem Hostcomputer sowohl die Information für die zu beleuchtenden Raumpunkte, Linien oder Flächen eingespeist werden als auch die Koordinaten der Raumumgebung, in der sich das Lasergerät befindet. Eine durch das Gerät gewonnene Messinformation wird an das Hostsystem zurück übertragen. Mittels einer manuellen Bedienungseinrichtung, beispielsweise einem Joy-Stick, ist der Laserstrahl ablenkbar. Durch das Anvisieren mehrerer Punkte im Raum, der Messung der Koordinaten dieser Punkte und entsprechendes Inbezugsetzen zur Raumumgebung ist die Stellung des Geräts relativ im Raum berechenbar. Anschliessend kann ein beliebiges Punkt-, Linien- oder Flächenmuster an die Raumwände abgebildet werden. Der Laserstrahl wird hierzu wiederholt in schneller Abfolge auf das Projektionsmuster gerichtet. Durch die Trägheit des menschlichen Auges ergibt sich ein stehendes, sichtbares Muster von Markierungen. Bei Verwendung eines Lasers, der sichtbares Licht aussendet, ist das projizierte Muster mit blossem Auge erkennbar.

Mittels der automatischen Nachführung des Laserstrahls können beliebige Punkte oder beliebige Linien im Raum verfolgt und deren Koordinaten aufgenommen werden. Ein Vergleich dieser Ist-Positionsdaten mit vorgegebenen Soll-Positionsdaten ist möglich. Ein berühungsloses Vermessen der Oberfläche eines Objekts im Raum bezogen auf ein beliebiges Koordinatensystem wird erreicht, indem der Laserstrahl die Oberfläche zeilenweise abtastet und die Koordinaten der Abtastpunkte in Form von Ablenkwinkel und Entfernung erfasst.

Durch Kopplung der Steuerungseinrichtung mit einem Empfänger für satellitengestützte Positionierung wie das Global Positioning System (GPS) ist die eigene Position bezüglich eines geographischen Koordinatensystems absolut bestimmtbar.

Nachfolgend wird die Erfindung anhand des in der Zeichnung dargestellten Ausführungsbeispiels im Detail erläutert. Es zeigen
Figur 1 ein Lasergerät im Schnitt,
Figur 2 ein Blockschaltbild des Geräts und
Figur 3 ein Anwendungsbeispiel.

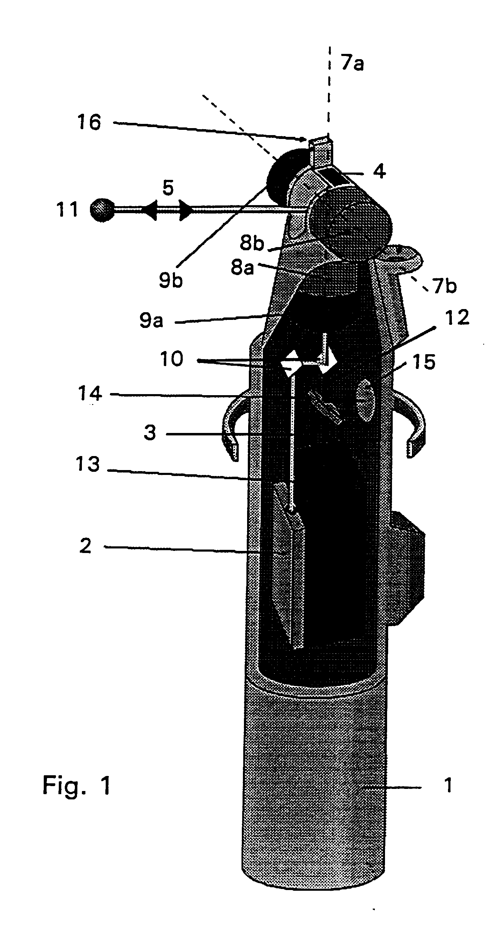

Das Gehäuse 1 des in Figur 1 dargestellten Geräts ist im oberen Abschnitt im Schnitt dargestellt. Es enthält eine Laserlichtquelle 2, die vorzugsweise einen sichtbaren Laserstrahl aussendet. Die Lichtquelle 2 enthält die Laserkollimationsoptik. Ausserdem ist im Lichtquellenmodul 2 die Ansteuerelektronik für den Laser enthalten. Der Laserstrahl 3 wird einer Sendeoptik 4 zugeführt und nach entsprechender Ablenkung als Sendestrahl 5 aus der Sendeoptik 4 abgestrahlt.

Die Sendeoptik 4 umfasst zwei - nicht darstellte - Ablenkmittel. Die Ablenkmittel sind in herkömmlicher Weise als Ablenkspiegel oder -prismen ausgeführt. Die Spiegel oder Prismen sind um eine Achse 7a bzw. 7b drehbar gelagert. Durch je einen zugeordneten Motor 8a, 8b wird die Drehstellung der Spiegel oder Prismen positionsgenau eingestellt. Je ein an den Drehachsen 7a, 7b befestigter Winkelkoder 9a bzw. 9b gibt den jeweils eingestellten Drehwinkel der Ablenkmittel an. Die Winkelkoder sind Präzisionsmesseinrichtungen, so dass eine hinreichend exakte Information über die Winkelstellung der Ablenkeinrichtungen vorliegt. Diese wird einer Systemsteuerungseinrichtung zugeführt, so dass die Stellmotoren 8a, 8b dementsprechend genau steuerbar sind. Durch die Winkelkoder wird die Ist-Drehstellung der Achsen gegenüber einer Referenzstellung ermittelt und digital kodiert. Die jeweilige Kombination aus Stellmotor und Präzisionswinkelkoder als axial angeordnetes Stellmittel gewährleistet eine exakte Steuerung und Messung der Winkelstellung der Ablenkmittel und somit eine exakte Einstellung der Laserstrahlrichtung.

Über weitere Spiegel oder Prismen 10 wird der von der Lichtquelle gelieferte Laserstrahl 3 auf parallel zur Drehachse 7a abgelenkt. Die Achsen 7a, 7b verlaufen im allgemeinen nicht parallel. Im Ausführungsbeispiel weisen die Achsen einen Schnittpunkt auf und stehen senkrecht zueinander. Der Laserstrahl 5 ist in der horizontalen Ebene um 360°, in der vertikalen Ebene um ungefähr 270° schwenkbar. Die Drehbewegungen um die beiden Achsen erfolgen prinzipiell unabhängig voneinander. Durch diese biaxiale Ablenkung des Laserstrahls sind nahezu alle interessierenden Raumpunkte einzeln und unabhängig voneinander beleuchtbar.

Die Sendeoptik 4 dient sowohl zur Aussendung des Laserstrahls 5 als auch zum Empfang des von einem Objekt 11 reflektierten Laserstrahls. Das Objekt 11 ist ein beliebiges Objekt, gegebenenfalls ein herkömmlicher Retroreflektor für die automatische Zielerfassung. Hierzu ist unter anderem eine Reflexfolie oder ein Prisma mit drei zueinander senkrecht stehenden Reflexionsflächen geeignet. Der reflektierte Teil des Laserstrahls wird in das Gehäuseinnere abgelenkt. Dann wird der empfangene Laserstrahl 12 einerseits in eine Einrichtung zur Entfernungsmessung 13 eingespeist. Die Entfernungsmessung erfolgt auf herkömmliche Weise: beispielsweise durch Ermittlung der Phasendifferenz zwischen Sende- und Empfangslaserstrahl oder durch Anwendung von Modulationstechniken. Andererseits wird mittels eines Strahlteilers 14 ein anderer Teil des empfangenen Strahls 12 in eine Einrichtung zur automatischen Strahlnachführung eingespeist, die den Laserstrahl einer Bewegung des Objekts nachführt. Für die Nachführungseinrichtung ist vereinfachend ein Sensor 15 gezeigt, beispielsweise ein CCD-Array (Charged Coupled Device). Die CCD-Anordnung enthält eine Vielzahl von einzelnen Sensorelementen, durch die der jeweilige Auftreffspunkt des Empfangsstrahls ermittelt wird. Eine - in Fig. 1 nicht dargestellte - Regelungseinrichtung bewirkt in Zusammenwirken mit der Systemsteuerungseinrichtung, dass beim Auswandern des Empfangsstrahls aus der Mitte des CCD-Arrays 15 die Ablenkeinrichtung 4 derart nachgestellt wird, dass der empfangene Strahl wieder in die Arraymitte zurückgeführt wird. Der ausgesandte Strahl 5 wird auf diese Weise dem Objekt 11 nachgeführt.

Der Laserstrahl wird dabei gepulst bzw. getaktet abgestrahlt. Sendeimpulse werden synchron mit der Empfangsfrequenz und insbesondere synchron mit der Belichtungszeit oder sogenannten Verschlusszeit der CCD-Anordnung abgestrahlt. Beispielsweise erzeugt die CCD-Anordnung Halbbilder mit einer Empfangsfrequenz von 50 Halbbildern pro Sekunde, d.h. Halbbilder werden nach jeweils 20 Millisekunden erzeugt. Die Belichtungs- oder Verschlusszeit der CCD-Anordnung für jedes Halbbild ist beispielsweise 1/500 Sekunden. Der Laserstrahl wird idealerweise nur während der Belichtungszeit für jedes Halbbild gepulst bzw. getaktet. Er ist ausreichend hell, damit er vom Bediener des Lasergeräts mit dem Auge erkannt wird. Für die CCD-Anordnung steht genügend Empfangsintensität zur Verfügung, um die Lage des Stahls relativ innerhalb der CCD-Anordnung sicher zu erkennen. Die integrale Leistung bleibt unterhalb des Verletzungsgrenzwerts bei direktem Sichtkontakt des menschlichen Auges, der beispielsweise 5 Milliwatt beträgt.

Zweckmässigerweise ist ein Indikator 16 am oberen Ende des Geräts angeordnet, der ein Lichtsignal anzeigt, welches einer das Objekt 11 führenden Person mitteilt, dass sich das Objekt 11 nicht mehr im Sendeweg des ausgesandten Laserstrahls 5 befindet. Die Nachführungssteuerungseinrichtung schaltet in diesem Fall den Indikator 16 aktiv.

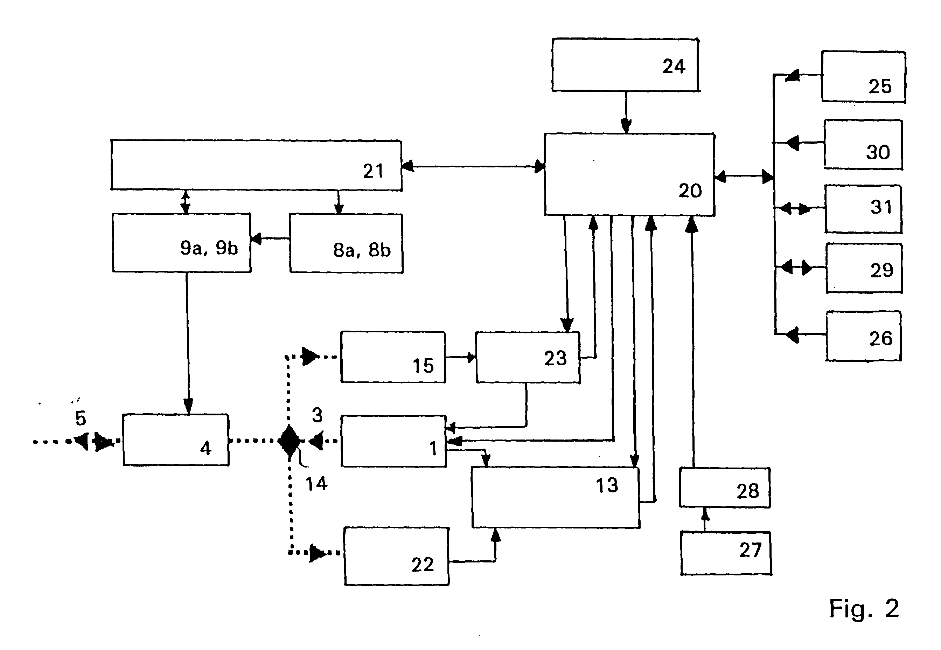

Im Blockdiagramm der Figur 2 ist der Signalfluss im Gerät detaillierter dargestellt. Ausserdem sind weitere Komponenten gezeigt. Zur Figur 1 entsprechende Elemente sind mit gleichen Bezugszeichen versehen. Die Systemsteuereinrichtung oder -elektronik 20 sorgt für die geräteinterne Ablaufsteuerung. Sie arbeitet digital und ist zweckmässigerweise mikroprozessorgestützt ausgeführt. Zur Aussendung eines Laserstrahls 5 aktiviert die Steuereinrichtung 20 die Ansteuerelektronik in der Laserlichtquelle 1 und gibt die Winkelinformation an eine Motorsteuereinrichtung 21 zur Steuerung der Sende- und Empfangsoptik 4 weiter. Die Motorsteuereinrichtung 21 erhält von den Winkelkodern 9a, 9b die Ist-Information der momentanen Winkelstellung, woraus ein Nachstellsignal für die Motoren 8a, 8b ermittelt wird. Ein durch die Sende- und Empfangsoptik 4 von einem Objekt reflektierter und empfangener Laserstrahl wird über einen Strahlteiler 14 sowohl einer Empfangsoptik für die elektronische Entfernungsmessung als auch dem CCD-Array 15 für die automatische Strahlnachführung zugeführt. Die Entfernungsmesseinrichtung 13 wertet Modulationsinformation des ausgesandten Strahls und des empfangenen Strahls oder jeweilige Phaseninformation aus und speist das Ergebnis in die Systemsteuereinrichtung 20 zurück. Eine Auswerteelektronik 23 für die ATR-Nachführung des Laserstrahls stellt der Systemsteuereinrichtung 20 eine Information für die Abweichung des empfangenen Laserstrahls von dem (in der Mitte des CCD-Arrays liegenden) Referenzpunkt bereit. Daraus wird entsprechende Winkelinformation zur Nachführung des Laserstrahls errechnet und der Motorsteuereinrichtung 21 übermittelt. Der Regelkreis der Nachführung umfasst die Komponenten 4, 15, 23, 20, 21, 9, 8. Die ATR-Auswerteeinrichtung 23 gibt ein Taktsignal zur Pulssteuerung des Lasers an die Ansteuerelektronik des Lasermoduls 1 weiter. ATR-Auswerteeinrichtung 23 sowie Entfernungsmesseinrichtung 13 werden von der Systemsteuerungselektronik 20 durch einen entsprechenden Steuerbefehl aktiviert und deaktiviert.

Die Mikroprozessorarchitektur der Systemsteuereinrichtung 20 arbeitet softwaregesteuert. Das Steuerprogramm wird von einem Speicher 24 bereitgestellt.

Um die eigene Position des Lasergeräts festzustellen, ist ein Empfänger 25 vorgesehen, der Positionsdaten aus einem satellitengestützten Positionierungssystem wie GPS an die Systemsteuereinrichtung 20 weitergibt. Eine Einrichtung 26 ermittelt die Höhe des Geräts über dem Boden. Hierzu ist ein in Richtung Boden ausgesandter und dort reflektierter weiterer Laserstrahl geeignet. Ein Neigungssensor 27 mit entprechender Messelektronik 28 stellt der Systemsteuereinrichtung 20 Information über den Neigungswinkel zur Verfügung. Dies ist beispielsweise der Neigungswinkel der Achse 7a gegenüber der Horizontalen.

Eine Schnittstelle zu einem Bedienungsrechner 29 dient dazu, Betriebsinformation des Geräts an einem Bildschirm darzustellen und Bedienungsinformation von einem Benutzer manuell einzugeben. Die Eingabemöglichkeit über Tastatur umfasst Befehle und Daten wie beispielsweise Zielkoordinaten des Laserstrahls. Zweckmässigerweise ist ausserdem ein analog bedienbares Eingabeelement wie ein Joy-Stick vorgesehen. Durch den Joy-Stick kann der Benutzer den Laserstrahl kontinuierlich und direkt an eine Zielposition führen. Eine Bewegung des Joy-Stick wird in eine Digitalinformation umgesetzt und der Systemsteuerelektronik 20 zugeführt. Dort wird die Digitalinformation in eine relative Veränderung der Ablenkwinkel für die Ablenkspiegel oder -prismen in der Ablenkoptik 4 umgesetzt, so dass die Motoren 8a, 8b dementsprechend angesteuert werden. Ein zusätzlicher Bedienungskomfort ergibt sich durch drahtlose Ansteuerung des Lasergeräts über eine Schnittstelle für eine Fernbedienung 30.

Eine Schnittstelle 31 zu einem Hostcomputer ist geeignet, um Daten für die Raumumgebung zu empfangen, in welcher sich das Lasergerät befindet, oder Plandaten über vom Laserstrahl zu beleuchtende Punkt-, Linien- oder Flächenmuster. Ausserdem können gemessene Ist-Daten an den Hostcomputer zurück übermittelt werden.

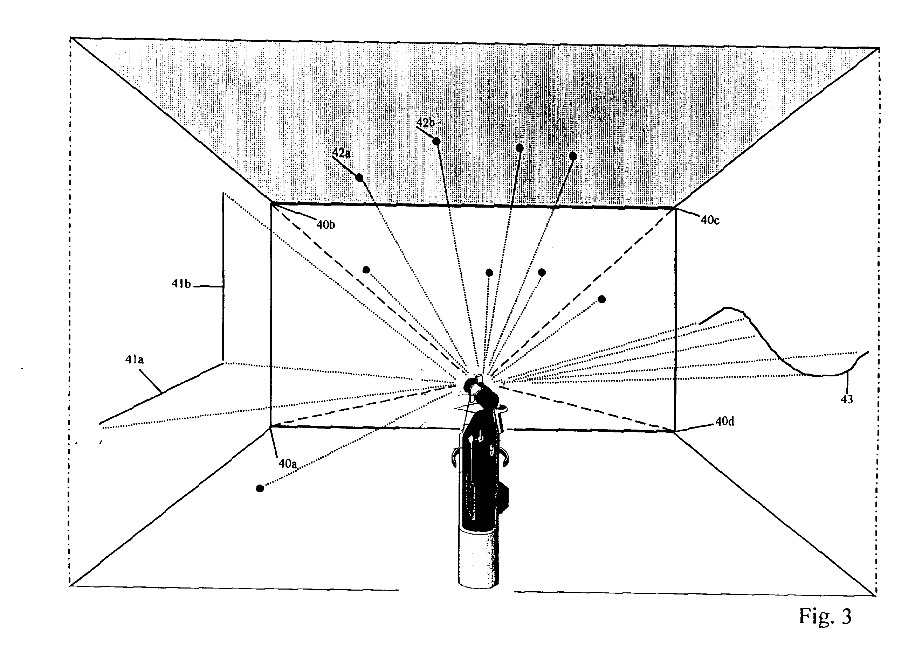

Ein für das Bauwesen charakteristisches Anwendungsbeispiel ist in Figur 3 dargestellt. Das Lasergerät befindet sich in einem Raum, dessen Koordinaten über die Hostschnittstelle 31 an das Gerät übermittelt wurden. Durch Bedienerführung über den Joy-Stick wird der Laserstrahl auf charakteristische Punkte des Raums gerichtet. Zweckmässigerweise sind dies die Eckpunkte 40a, 40b, 40c, 40d. Das Gerät misst die Koordinaten dieser Punkte und errechnet daraus nach entsprechender Befehlseingabe über die Tastatur seine Eigenposition innerhalb des Raums. Ein Koordinatensystem ist damit festgelegt. Über die Hostschnittstelle 31 werden dem Gerät Plandaten für im Raum zu projizierende Muster übermittelt. Dies sind Daten über zwei senkrecht zueinander verlaufenden Linien 41a, 41b; Daten über verschiedene beabstandete Einzelpunkte wie 42a, 42b; ausserdem Daten über eine beliebige, nicht lineare Kurve 43. Die Systemsteuereinrichtung 20 veranlasst dann das Lasergerät, diese Muster im Raum zu beleuchten. Die Ablenkoptik wird dabei mit ausreichender Präzision und Wiederholfrequenz angesteuert, so dass trotz aufeinanderfolgender Belichtung der einzelnen Kurven und Raumpunkte diese wegen der Trägheit des menschlichen Auges weitgehend konstant leuchtend erscheinen.

In einem anderen Anwendungsfall soll durch das Lasergerät die Lage eines Raumpunktes festgestellt werden. Hierzu wird entweder ein Retroreflektor in den sichtbaren Laserstrahl gerichtet und dann zum zu messenden Raumpunkt bewegt. Die Nachführungsautomatik sorgt dafür, dass der Laserstrahl der Bewegung des Reflektors folgt. Oder aber es wird das Lasergerät auf ein beliebiges Objekt gerichtet. Am Raumpunkt angekommen, werden nach Messung von Entfernung und Raumwinkel über die Winkelkoder der Ablenkeinrichtung die Koordinaten des Punkts in der Steuerungseinrichtung 20 berechnet.

Eine andere Anwendungsmöglichkeit des Geräts ergibt sich dann, wenn Raumpunkte, -kurven oder -flächen bereits vorhanden sind, und die Ist-Lage dieser Muster mit den Plandaten zu vergleichen ist. Die vom Hostsystem dem Lasergerät mitgeteilten Plandaten werden in den Raum wie oben beschrieben projiziert. Die Soll-Ist-Abweichung ist dann sichtbar. Mittels des Joy-Stick oder des Retroreflektors wird der Laserstrahl in den tatsächlich vorhandenen Ist-Raumpunkt gelenkt, so dass die Soll-Ist-Abweichung gemessen wird.

Die oben beschriebenen Anwendungsmöglichkeiten des Lasergeräts treten zu den Anwendungen bisheriger Punkt- oder Rotationslasergeräten hinzu und werden erst durch die Ausgestaltung gemäss der Erfindung ermöglicht, indem die Ablenkmittel für den sichtbares Licht aussendenden Laserstrahl um zwei zueinander geneigte Achsen exakt dreh- und steuerbar sind.

## Patentansprüche

1. Lasergerät, umfassend:
- eine Einrichtung (1) zur Erzeugung eines Laserstrahls (3),
- eine Sendeoptik (4) zur Ablenkung des Laserstrahls (3), die zwei jeweils um eine Achse (7a, 7b) drehbare optische Ablenkmittel umfasst, wobei die Achsen (7a, 7b) nicht parallel zueinander verlaufen,
- je eine mit den Ablenkmitteln gekoppelte Stelleinrichtung (8a, 8b, 9a, 9b) zum Festlegen der Drehstellung des jeweiligen Ablenkmittels und
- eine Steuerungseinrichtung (20) zur Steuerung der Stelleinrichtungen (8a, 8b, 9a, 9b) in Abhängigkeit von einer vorgegeben Richtung.

2. Lasergerät nach Anspruch 1,
gekennzeichnet durch eine Empfangsoptik (4) zum Empfang des von der Sendeoptik (4) ausgesandten und von einem Objekt (11) reflektierten Laserstrahls und durch eine Einrichtung (13, 22) zur Entfernungsmessung, um die Entfernung des Objekts (11) vom Gerät zu ermitteln.

3. Lasergerät nach Anspruch 1,
gekennzeichnet durch eine Empfangsoptik (4) zum Empfang des von der Sendeoptik (4) ausgesandten und von einem Objekt (11) reflektierten Laserstrahis und durch eine Einrichtung (15, 23) zur Nachführung des Laserstrahls (5) in Abhängigkeit von einer Bewegung des Objekts (11).

4. Lasergerät nach Anspruch 3,
dadurch gekennzeichnet, dass ein Sensor (15) vorgesehen ist, um die Lage des empfangenen Laserstrahls (12) relativ zu einem empfangsseitigen Bezugspunkt festzustellen, und dass die Steuerungseinrichtung (20) die Stelleinrichtungen (8a, 8b, 9a, 9b) im Sinne einer gegenkoppelnden Rückkopplung steuert.

5. Lasergerät nach Anspruch 4,
dadurch gekennzeichnet, dass der Laserstrahl (3) pulsweise erzeugt wird und ein Laserimpuls synchron zu einer Empfangsfrequenz des Sensors (15) und/oder synchron zu einer Belichtungszeitdauer des Sensors (15) erzeugt wird.

6. Lasergerät nach den Ansprüchen 3, 4 oder 5, sofern auf Anspruch 2 zurückbezogen,
dadurch gekennzeichnet, dass die Sendeoptik (4) auch als Empfangsoptik (4) dient und dass ein Strahlteiler (14) im Empfangsweg des Laserstrahls (12) vorgesehen ist, der den Empfangsstrahl aufteilt in einen Anteil, der der Einrichtung (13, 22) zur Entfernungsmessung zugeführt wird, und einen anderen Anteil, der der Einrichtung (15, 23) zur Nachführung zugeführt wird.

7. Lasergerät nach einem der Ansprüche 1 bis 6,
dadurch gekennzeichnet, dass die Stelleinrichtungen Elektromotoren (8a, 8b) umfassen, die durch eine von der Steuerungseinrichtung (20) bereitgestellte Winkelinformation gesteuert werden und/oder Winkelinformation in die Steuerungseinrichtung (20) rückkoppeln.

8. Lasergerät nach einem der Ansprüche 1 bis 7,
dadurch gekennzeichnet, dass durch die Steuerungseinrichtung (20) Information für eine Vielzahl von einzelnen vorgegebenen Projektionspunkten (42a, 42b) speicherbar ist und dass die Stelleinrichtungen (8a, 8b, 9a, 9b) in Abhängigkeit von den vorgegebenen Punkten steuerbar sind, um die Lichtachse des Laserstrahls nacheinander auf jeden der vorgegebenen gespeicherten Punkte zu richten und den jeweiligen Punkt zu beleuchten.

9. Lasergerät nach einem der Ansprüche 1 bis 7,
dadurch gekennzeichnet, dass durch die Steuerungseinrichtung (20) die Information für die Projektion einer vorgegebenen Kurve (41a, 41b, 43) und/oder einer vorgegebenen Fläche speicherbar ist und dass die Stelleinrichtungen (8a, 8b, 9a, 9b) in Abhängigkeit von der Information steuerbar sind, um die Lichtachse des Laserstrahls entlang der Kurve beziehungsweise innerhalb der Fläche zu führen.

10. Lasergerät nach den Ansprüchen 8 oder 9,
gekennzeichnet durch eine digitale Schnittstelle (31), durch die die Steuerungseinrichtung (20) mit Daten für ein zu vermessendes Objekt und/oder mit Daten für das im Objekt zu projizierende Punkt- beziehungsweise Kurven- beziehungsweise Flächenmuster versorgt wird.

11. Lasergerät nach einem der Ansprüche 1 bis 10,
gekennzeichnet durch eine manuelle Bedienungseinrichtung (29), durch die vermittels der Steuerungseinrichtung (20) die Stelleinrichtungen (8a, 8b, 9a, 9b) steuerbar sind.

12. Lasergerät nach einem der Ansprüche 1 bis 11,
dadurch gekennzeichnet, dass der Laserstrahl (3, 5, 12) sichtbares Licht enthält.

13. Lasergerät nach einem der Ansprüche 1 bis 12,
gekennzeichnet durch einen Empfänger (25) für ein satellitengestütztes Positionierungssystem, dessen empfangene Positionsdaten der Steuerungseinrichtung (20) zuführbar sind.

14. Lasergerät, umfassend:
- eine Einrichtung (1) zur Erzeugung eines gepulsten bzw. getakteten Laserstrahls (3),
- eine Sende- und Empfangsoptik (4) zur Abstrahlung des Laserstrahls (3) und zum Empfang des von einem Objekt (11) reflektierten Laserstrahls,
- einen Sensor (15) zur Detektion des empfangenen Laserstrahls und
- Steuerungsmittel (23, 20) zur geräteinternen Steuerung in Abhängigkeit des vom Sensor (15) detektierten Laserstrahls, wobei
- ein Sendeimpuls des Laserstrahls synchron zu einer Empfangsfrequenz des Sensors (15) und/oder synchron zu einer Belichtungszeitdauer des Sensors (15) abgestrahlt wird.

15. Lasergerät nach Anspruch 14,
dadurch gekennzeichnet, dass durch die Steuerungsmittel (23, 20) die Lage des empfangenen Laserstrahls (12) relativ zu einem empfangsseitigen Bezugspunkt festgestellt wird und die Abstrahlungs- und Empfangsrichtung der Send- und Empfangsoptik (4) im Sinne einer gegenkoppelnden Rückkopplung gesteuert wird.
